# EUROPÄISCHE PATENTSCHRIFT

(11) **EP 1 049 859 B1**
(45) Veröffentlichungstag und Bekanntmachung des Hinweises auf die Patenterteilung: **09.10.2002**
(21) Anmeldenummer: 99901590.2
(22) Anmeldetag: 08.01.1999
(51) Int. Cl.: F02B 27/02, F02B 75/22

(54) **SAUGANLAGE ZUR VERBRENNUNGSLUFTVERSORGUNG EINER BRENNKRAFTMASCHINE**
SUCTION SYSTEM FOR SUPPLYING AN INTERNAL COMBUSTION ENGINE WITH COMBUSTION AIR
SYSTEME D'ASPIRATION POUR ALIMENTER UN MOTEUR A COMBUSTION INTERNE EN AIR DE COMBUSTION

(30) Priorität: 31.01.1998 DE 19803804
(43) Veröffentlichungstag der Anmeldung: 08.11.2000
(60) Teilanmeldung: 00126565.1
(73) Patentinhaber: Volkswagen Aktiengesellschaft, 38436 Wolfsburg (DE)
(72) Erfinder: LIESKE, Stefan, D-38302 Wolfenbüttel (DE); SCHOLZ, Holger, D-38106 Braunschweig (DE)
(86) Internationale Anmeldenummer: EP9900065
(87) Internationale Veröffentlichungsnummer: WO99039088

(56) Entgegenhaltungen:
- EP-A- 0 400 952
- EP-A- 0 450 530
- DE-A- 4 028 443
- PATENT ABSTRACTS OF JAPAN vol. 017, no. 447 (M-1464), 17. August 1993 & JP 05 098969 A (HONDA MOTOR CO LTD), 20. April 1993
- PATENT ABSTRACTS OF JAPAN vol. 014, no. 323 (M-0997), 11. Juli 1990 & JP 02 108818 A (MAZDA MOTOR CORP), 20. April 1990

## Beschreibung

Die Erfindung betrifft eine Sauganlage zur Verbrennungsluftversorgung einer Brennkraftmaschine, insbesondere für ein Kraftfahrzeug.

Aus Asia-Pacific Automotive Report, Band 234, 5.4.1996 ist es bekannt, mittels zweier schaltbarer Klappen ein Resonanzrohr lang oder kurz zu schalten und somit eine entsprechende Resonanzlänge wahlweise zu ändern. Dieses System schaltet jedoch nur zwischen verschiedenen Resonanzzuständen hin und her, was eine optimale Zylinderfüllung lediglich über einen eingeschränkten Drehzahlbereich gewährleistet. Daher ist eine dritte schaltbare Klappe vorgesehen, welche in geöffnetem Zustand einen Strömungsquerschnitt für Verbrennungsluft entsprechend erhöht, so daß bei hohen Umdrehungszahlen eine große Massenströmung gewährleistet ist. Dies zerstört jedoch vollständig jeglichen Resonanzeffekt im Ansaugsystem der Verbrennungsluft und unterstützt in keiner Weise zusätzlich die Zylinderfüllung.

Aus der EP-A-0 400 952 ist eine Ansauganlage für eine Brennkraftmaschine mit mehreren Zylindern, die auf zwei Zylinderreihen aufgeteilt sind, bekannt, wobei zwei Luftsammter mittels einer Resonanzklappe wahlweise miteinander verbindbar sind. In jedem Luftsammler ist eine oder sind mehrere Ausgleichsklappen vorgesehen, die in geschlossener Stellung den jeweiligen Sammler in eine (U-förmige) lange Ansaugstrecke teilt bzw. teilen. Bei hohen Drehzahlen ergibt sich bei geöffneter Klappe ein Luftsammler mit großem bzw. vergrößertem Volumen, wobei von jedem Sammler zu jeweils einer Zylinderreihe führende Saugrohre vorgesehen sind, die im oberen Drehzahlbereich Schwingrohre sind.

Der vorliegenden Erfindung liegt daher die Aufgabe zugrunde, eine verbesserte Sauganlage der obengenannten Art zur Verfügung zu stellen, wobei die obengenannten Nachteile überwunden werden und über einen möglichst großen Drehzahlbereich der Brennkraftmaschine eine optimale Zylinderfüllung mit Verbrennungsluft zu erzielen.

Diese Aufgabe wird erfindungsgemäß durch eine Sauganlage der o.g. Art mit den in Anspruch 1 angeführten Merkmalen gelöst. Vorteilhafte Ausgestaltungen der Erfindung sind in den abhängigen Ansprüchen angegeben.

Dazu ist es erfindungsgemäß vorgesehen, daß die Brennkraftmaschine eine Kurbelwelle mit 180-Grad-Kurbelwinkel und n Zylindern aufweist, wobei die Zylinder 1 bis n/2 über jeweilige Saugrohre mit einem ersten Luftsammler und die Zylinder n/2+1 bis n über jeweilige Saugrohre mit einem zweiten Luftsammler verbunden sind, und daß die Ausgleichsklappe und die Saugrohre eines Luftsammlers derart angeordnet sind, daß sich bei geschlossener Ausgleichsklappe für die jeweils über die Saugrohre versorgten Zylinder mit zunehmender Zylindemummer eine zunehmende Saugstrecke ergibt.

Dies hat den Vorteil, daß auf baulich einfache und bauraumoptimierte Weise wahlweise für niedrige Drehzahlbereiche der Brennkraftmaschine eine Resonanzaufladung durch Schließen der Ausgleichsklappen oder für hohe Drehzahlbereiche der Brennkraftmaschine eine Schwingrohraufladung durch Öffnen der Ausgleichsklappen realisiert ist.

Für Brennkraftmaschinen mit Zylindern, welche auf getrennten Zylinderbänken angeordnet sind, beispielsweise bei einem Acht-Zylindermotor in V- oder Doppel-V-Anordnung bzw. VR-Anordnung, ist es besonders vorteilhaft, zwei separate Luftsammler vorzusehen.

Einen zusätzlichen Resonanzzustand für einen mittleren Drehzahlbereich der Brennkraftmaschine erzielt man dadurch, daß je zwei Luftsammler über ein Resonanzrohr miteinander verbunden sind, wobei das Resonanzrohr eine Resonanzklappe zum wahlweise Öffnen oder Schließen desselben derart aufweist, daß die jeweiligen Luftsammler wahlweise über das Resonanzrohr miteinander verbunden sind oder nicht.

Einen besonders kleinen Bauraumbedarf durch kompakte Bauweise erzielt man dadurch, daß die Zylinder beispielsweise auf wenigstens zwei Zylinderbänke, insbesondere auf zwei Zylinderdoppelbänke, verteilt sind, wobei jeder Luftsammler Zylinder einer Zylinderbank oder einer Zylinderdoppelbank mit Verbrennungsluft versorgt und die Saugrohre des ersten Luftsammlers diejenigen des zweiten Luftsammlers kreuzen.

Die Ausgleichsklappe und die Saugrohre eines Luftsammler sind dabei zweckmäßigerweise derart angeordnet, daß sich bei geschlossener Ausgleichsklappe für die jeweils über die Saugrohre versorgten Zylinder mit zunehmender Zylindernummer eine zunehmende Saugstrecke ergibt.

Zweckmäßigerweise ist n = 4 oder 8. Im letzterem Fall lautet eine Zündfolge der Zylinder 1 bis 8 beispielsweise folgendermaßen: 1-5-2-6-4-8-3-7.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1 und 2: eine erste bevorzugte Ausführungsform einer erfindungsgemäßen Sauganlage in teilweise geschnittener Aufsicht in jeweils verschiedenen Schaltzuständen,
- Fig. 3: eine zweite bevorzugte Ausführungsform einer erfindungsgemäßen Sauganlage in teilweise geschnittener Aufsicht,
- Fig. 4: die zweite bevorzugte Ausführungsform einer erfindungsgemäßen Sauganlage von Fig. 3 in einer Querschnittdarstellung,
- Fig. 5 bis 7: die zweite bevorzugte Ausführungsform einer erfindungsgemäßen Sauganlage von Fig. 3 in teilweise geschnittener Aufsicht, jeweils in unterschiedlichen Schaltzuständen.

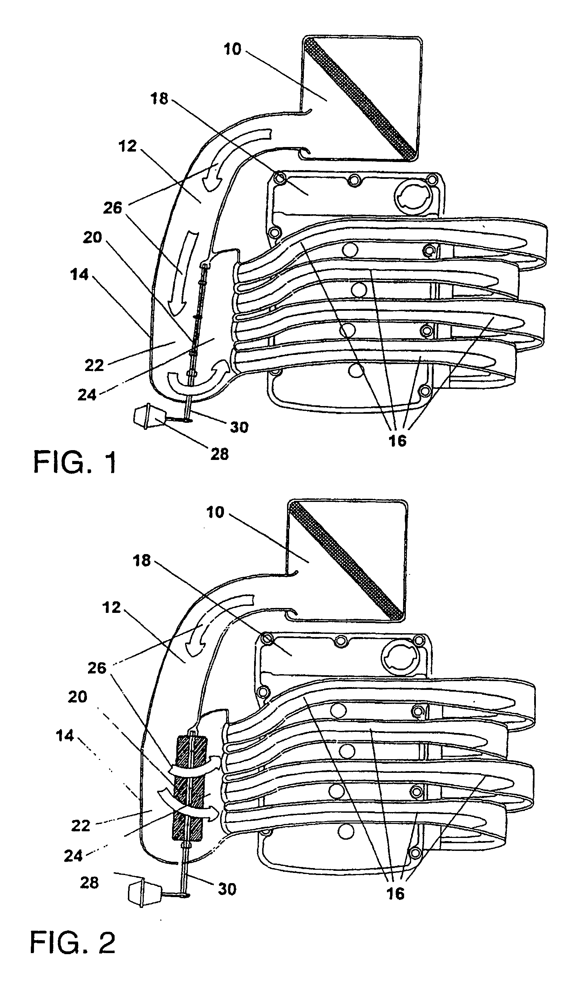

Die in Fig. 1 und 2 dargestellte erste bevorzugte Ausführungsform einer erfindungsgemäßen Sauganlage umfaßt in Strömungsrichtung gesehen einen Luftfilter 10, eine Vorsaugstrecke 12, einen Luftsammler 14 und zylinderindividuelle Saugrohre 16, welche zu nicht dargestellten Lufteinlässen für Zylinder einer Brennkraftmaschine 18 führen. Im Luftsammler 14 ist eine Ausgleichsklappe 20 drehbar derart angeordnet, daß sie den Luftsammler 14 im geschlossenen Zustand, wie in Fig. 1 dargestellt, in zwei Teile teilt. Ein luftfilterseitiger Raum 22 des Luftsammlers 14 wirkt dabei zusätzlich als Vorsaugstrecke, während ein saugrohrseitiger Raum 24 als Luftsammler mit reduziertem Volumen wirkt. In dieser Schaltstellung gemäß Fig. 1 strömt von der Brennkraftmaschine 18 angesaugte Verbrennungsluft gemäß der Pfeile 26 über eine verlängerte Vorsaugstrecke und die Dimensionen der Bauteile ist derart gewählt, daß sich für einen unteren Drehzahlbereich der Brennkraftmaschine 18 eine Resonanzladung ergibt, da eine Reflexion von Druckwellen am Luftfiltersystem 10 und in der Vorsaugstrecke die Strömungsdynamik beherrscht.

In dem zweiten in Fig. 2 dargestellten Schaltzustand ist die Ausgleichsklappe von einem Antrieb 28, wie beispielsweise einem Elektromotor, um 90 Grad gedreht, so daß sich ein Luftsammler 14 mit vergrößertem Volumen aus der Summe der Räume 22 und 24 ergibt und ferner die Vorsaugstrecke 12 reduziert ist. Nun beherrschen die zweckmäßigerweise als Schwingrohre für die Brennkraftmaschine 18 in einem oberen Drehzahlbereich ausgebildeten und dimensionierten Saugrohre 16 das Strömungsverhalten der von der Brennkraftmaschine angesaugten Verbrennungsluft, so daß sich eine Schwingrohraufladung ergibt. In dieser Schaltstellung bestimmt also die Reflexion der Druckwellen am Luftsammter 14 das Systemverhalten.

Die Ausgleichsklappe 20 muß nicht notwendigerweise in einem Stück im Luftsammler 14 angeordnet sein. Vielmehr ist es auch möglich, die Ausgleichsklappe in zwei oder mehr Abschnitte zu unterteilen, welche gemeinsam oder getrennt gedreht werden und separat gelagert sind. Dies hat den Vorteil, daß eine Neigung großer Ausgleichsklappen 20 zum Flattern wirksam reduziert ist. Ferner ist es in einer vorteilhaften Weiterbildung der Erfindung auch möglich mehrere Ausgleichsklappen 20 hintereinander vorzusehen derart, daß das Luftsammlervolumen und damit auch die Länge der Vorsaugstrecke in mehreren Stufen vergrößert und verkleinert werden können.

Der besondere Vorteil der erfindungsgemäßen Sauganlage liegt in der Kombination des Schwingrohr- und des Resonanzprinzips. Je nach Stellung der Ausgleichsklappen 20 erfolgt gezielt entweder eine Resonanzaufladung oder eine Schwingrohraufladung mit ein und derselben Sauganlage. Hierbei sind jedoch nicht mehrere und entsprechend verschieden dimensionierte Saugrohre oder Luftsammler notwendig.

In der Darstellung von Fig. 1 und 2 ist die erfindungsgemäße Sauganlage beispielhaft für einen 4-Zylindermotor ausgelegt. Es sind jedoch auch entsprechende erfindungsgemäße Ausbildung für Motoren mit beliebiger Zylinderzahl möglich. Daher werden nachfolgend weitere Ausführungsbeispiele für Brennkraftmaschinen 18 mit acht Zylindern beschrieben, wobei auch dies nur beispielhaft zur besseren Veranschaulichung des erfindungsgemäßen Prinzips zu verstehen ist.

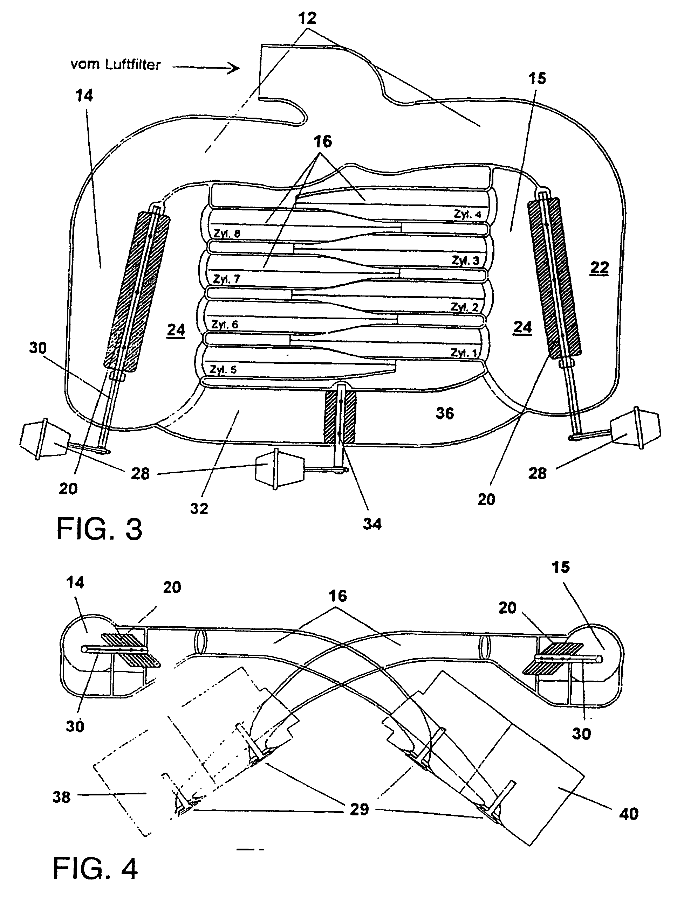

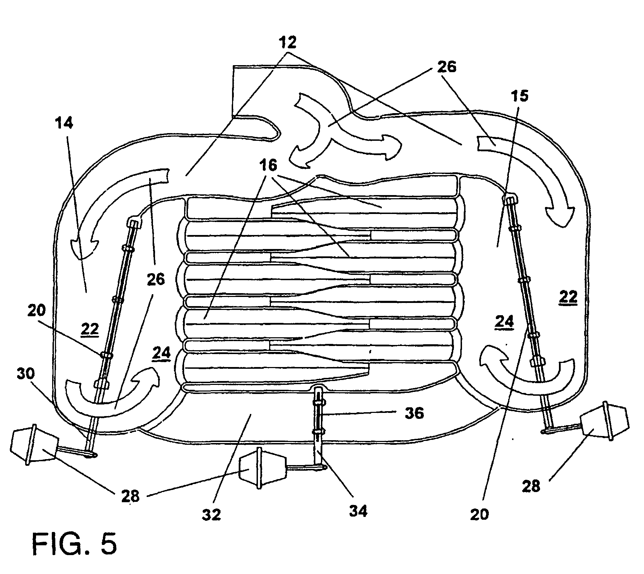

Die erfindungsgemäße Sauganlage eignet sich ebenfalls, wie voranstehend erwähnt, auch für 8-Zylindermotoren, wie in den Fig. 3 bis 7 dargestellt. Hierbei sind die Zylinder der Brennkraftmaschine 18 in doppelter V-Anordnung, d.h. als sog. VR-Motor, aufgereiht. Es sind zwei Luftsammler 14 und 15 vorgesehen, wobei jeweils ein Luftsammler 14 mit vorbestimmten Zylindern der Brennkraftmaschine 18 und der jeweilige andere Luftsammler 15 mit den übrigen Zylindern der Brennkraftmaschine 18 verbunden ist und diese über Lufteinlässe 29 mit Verbrennungsluft versorgen. Die Vorsaugstrecke 12 versorgt bei Luftsammler 14 und 15 mit Verbrennungsluft. In beiden Luftsammlern 14, 15 ist je eine drehbar um eine Achse 30 gelagerte Ausgleichsklappe 20 angeordnet. Zusätzlich ist in einer Art Parallelschaltung bezüglich der Saugrohre 16 ein die zwei Luftsammler 14 und 15 verbindendes Resonanzrohr 32 vorgesehen. In dem Resonanzrohr 32 ist eine um eine Achse 34 drehbar gelagerte Resonanzklappe 36 vorgesehen, welche wahlweise, je nach Stellung, eine fluidleitende Verbindung zwischen den Luftsammlern 14 und 15 über das Resonanzrohr 32 herstellt oder nicht. Die Ausgleichsklappen 20 und die Resonanzklappe 36 sind vom Antrieb 28, beispielsweise jeweiligen Elektromotoren, derart betätigbar, daß die Klappen 20 und 36 entweder in einer offenen oder geschlossenen Stellung sind. Durch entsprechende Kombination der geöffneten und geschlossenen Stellungen der Klappen 20 und 36 ergeben sich im wesentlichen drei unterschiedliche Schaltzustände, welche später anhand der Fig. 5 bis 7 näher beschrieben werden.

Auch bei diesem erfindungsgemäßen Saugrohrkonzept gemäß der Fig. 3 und 4 handelt es sich um ein kombiniertes Schwingrohr-Resonanzsystem, bei dem die Volumina der Sammler 14 und 15 und die Längen der jeweiligen Vorrohre 12 schaltbar sind. Das System ermöglicht einen hohen Liefergrad über ein breites Drehzahlspektrum. Es kann bauraumoptimiert sehr flach ausgeführt werden.

Zur Erzeugung ungestörter Ansaugvorgänge werden bei der Ausführungsform gemäß Fig. 3 und 4 jeweils Zylinder mit 180°Kurbelwinkel Zündabstand an jeden der Sammler 14, 15 angeschlossen. Für eine Zündfolge **1-5-2-6-4-8-3-7** ("180°Kurbelwelle") werden die Zylinder 1,2,3 und 4 bzw. 5,6,7 und 8 an jeweils einen gemeinsamen Sammler 14 oder 15 angeschlossen (Fig. 3). Daraus ergibt sich z.B. eine, in Bild 4 in Schnittansicht prinzipiell dargestellte, gekreuzte Saugrohrführung für alle 8 Zylinder. Der Luftsammler 14 ist über einer Zylinderbank 38 angeordnet und die jeweiligen Saugrohre 16 verlaufen zu einer gegenüberliegenden Zylinderbank 40, über der der andere Luftsammler 15 angeordnet ist. Dessen Saugrohre 16 sind wiederum in analoger Weise mit der dem Luftsammler 15 gegenüberliegenden Zylinderbank 38 verbunden.

Durch die schaltbare Volumenänderung der Luftsammler 14 und 15 mittels der Ausgleichsklappen 20 wird die Abstimmung der Systemschwingung insbesondere im unteren Drehzahlbereich durchgeführt. Dazu wird durch eine Schaltung das schwingfähige Luftsammlervolumen im Zusammenhang mit der Geometrie der Vorsaugstrecke 12 zwischen Luftsammler 14, 15 und Luftfilter (in Fig. 3 und 4 nicht dargestellt) in ein schwingfähiges Resonanzsystem umgeschaltet.

Das Luftsammlervolumen kann durch eine entsprechende Schaltung der Ausgleichsklappen 20 verkleinert und ein Teil des Luftsammlervolumens als rohrähnliche Verlängerung 22 der Vorsaugstrecke 12 genutzt werden (Fig. 5). Damit wird eine den unteren Drehzahlen angepaßte Eigenfrequenz des Schwingungssystems erzeugt, die zur Resonanzaufladung genutzt wird.

Durch diese schaltbare Querverbindung der beiden Luftsammler 14 und 15 mittels des Resonanzrohres 32 wird eine Resonanzschwingung zwischen den beiden Luftsammlem 14 und 15 ermöglicht. Durch die Auslegung der Resonanzrohrlänge und des Resonanzrohrdurchmessers wird eine Anpassung des Resonanzsystems an das jeweilige Motorsystem durchgeführt. Dieses Resonanzsystem wird insbesondere im mittleren Drehzahlbereich zur Optimierung der Saugrohrschwingung eingesetzt.

Bei geschlossener Resonanzklappe 36 im auch als Querrohr bezeichneten Resonanzrohr 32 wird eine Schwingrohraufladung durch die Saugrohre 16 und das Luftsammlervolumen dargestellt. Die Abstimmung des Systems erfolgt durch Saugrohrdurchmesser und Saugrohrlänge sowie Luftsammlervolumen 22, 24 in Zusammenhang mit der Sauganregung durch die Zylinder.

Unterschiede in den Schwinglängen der Saugrohre 16 infolge unterschiedlicher Kanallängen in Zylinderköpfen werden durch die Saugrohrführung zwischen Zylinderkopf und Hauptsammler (in den Fig. nicht dargestellt) ausgeglichen. Bei Motoren mit variabler Nockenwelle wird diesem Umstand zusätzlich beispielsweise durch unterschiedliche Einlaßnockenkonturen Rechnung getragen. Weiterhin können definierte Druckverluste der einzelnen Saugrohre 16 als Kompensationsmaßnahme genutzt werden.

Im folgende wird unter Bezugnahme auf die Fig. 5 bis 7 das Funktionsprinzip der erfindungsgemäßen Sauganlage erläutert.

Die Schaltstufe 1 (Fig. 5) dient der Zylinderfüllung im unteren Drehzahlbereich. Dazu werden die Sammlervolumina durch das Schließen der Ausgleichsklappen 20 verkleinert und die Filterluftansaugstrecken 12 durch die abgetrennten Luftsammlerbereiche 22 und 24 verlängert. Die Resonanzklappe 36 zwischen den Luftsammlern 14 und 15 bleibt verschlossen. Bei Motoren mit variabler Nockenwelle sind bevorzugt die Einlaßnockenwellen in Momentenstellung (frühe Öffnungszeiten) geschaltet. In dieser Schaltstellung wird die Reflexion der Druckwellen am Luftfiltersystem und in der Vorsaugstrecke 12 bedeutsam. Dadurch wird eine Resonanzaufladung im unteren Drehzahlbereich erzeugt. Die Teilrohre des durch die Resonanzklappe verschlossenen Querrohres bzw. Resonanzrohres 32 werden dabei als λ/4-Rohre zur Unterstützung der Systemschwingung des Luftsammlers 14, 15 genutzt.

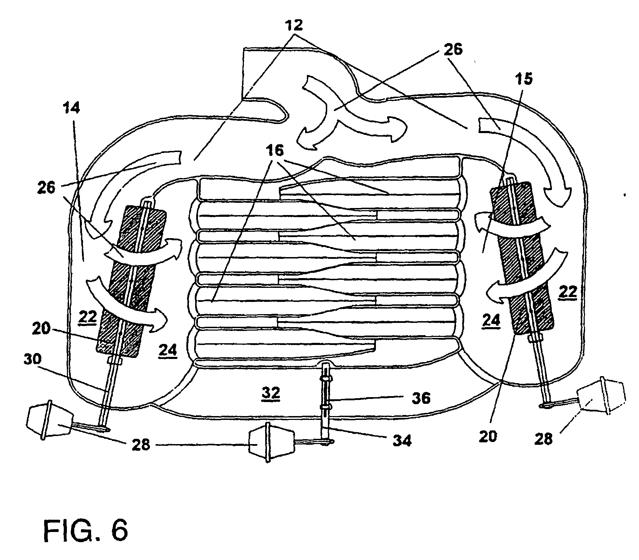

In der Schaltstufe 2 (Fig. 6) werden die Sammlervolumina durch Öffnen der Ausgleichsklappen 20 vergrößert. Die Resonanzklappe 36 ist geschlossen. Bei Motoren mit variabler Nockenwelle stehen die Einlaßnockenwellen bevorzugt in Frühstellung. In dieser Schaltstellung bestimmt die Reflexion der Druckwellen am Luftsammler 14, 15 das Systemverhalten. Das erfindungsgemäße Saugsystem arbeitet nach dem Prinzip der Schwingrohraufladung.

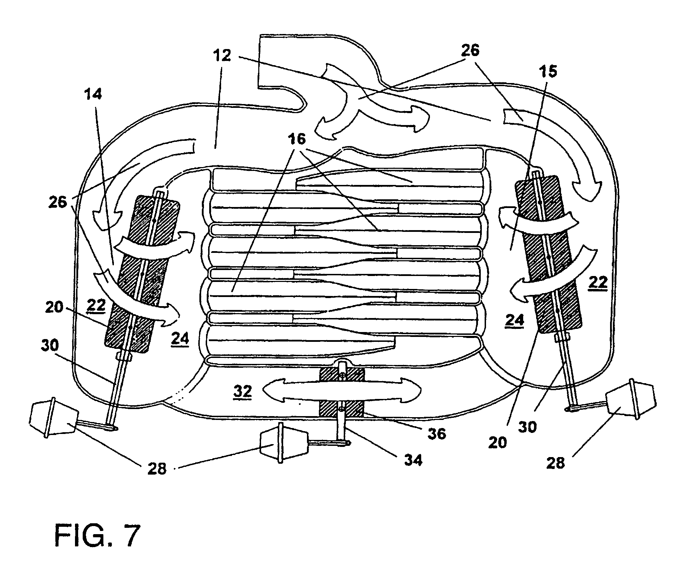

In der Schaltstufe 3 (Fig. 7) sind die Ausgleichsklappen 20 und die Resonanzklappe 36 geöffnet. Bei Motoren mit variabler Nockenwelle befinden sich die Einlaßnockenwellen bevorzugt in Frühstellung. Durch das Öffnen der Resonanzklappe 36 wird ein Massenaustausch zwischen den Luftsammlern 14 und 15 ermöglicht sowie eine Resonanzschwingung zwischen den beiden Luftsammlern 14 und 15 erzeugt. Diese Resonanzschwingung wird zur Steigerung der Zylinderfüllung im mittleren Drehzahlbereich genutzt.

Bei Motoren mit variabler Nockenwelle läßt sich zusätzlich eine Schaltstufe 4 realisieren, welche bezüglich der Stellung von Ausgleichsklappen 20 und Resonanzklappe 36 der voranstehend erläuterten Schaltstufe 2 gleicht. Durch das Öffnen der Ausgleichsklappen 20 stehen die vollen Luftsammlervolumina zur Verfügung. Auf Grund der geschlossenen Resonanzklappe 36 wird der unmittelbare Druckaustausch zwischen den beiden Luftsammlern 14 und 15 verhindert. Zusätzlich wird jedoch durch eine Spätstellung der Einlaßnockenwellen das Schwingrohraufladungssystem an obere Drehzahlbereiche angepaßt.

Durch Anpassung von Rohrlängen und Rohrdurchmesser im Ansaugsystem wird im Zusammenhang mit der Luftsammlervolumenreduktion und einer ggf. durchgeführten Verstellung von Einlaßnockenwellen eine Anpassung des Saugsystems an die jeweils vorliegende Motorkonfiguration durchgeführt.

## Patentansprüche

1. Sauganlage zur Verbrennungsluftversorgung einer Brennkraftmaschine (18), insbesondere für ein Kraftfahrzeug, mit wenigstens einem separaten Luftsammler (14,15), von welchem jeweils zylinderindividuelle Saugrohre (16) zu Lufteinlässen von Zylindern der Brennkraftmaschine (18) führen, wobei in dem Luftsammler (14,15) wenigstens eine Ausgleichsklappe (20) angeordnet ist, welche den Luftsammler (14,15) wahlweise in geschlossenem Zustand zu einer langen Vorsaugstrecke (12,22) teilt oder in geöffnetem Zustand statt einer langen Vorsaugstrecke (12,22) einen Luftsammler (14,15) mit vergrößertem Volumen (22,24) zur Verfügung stellt, wobei die Saugrohre (16) als Schwingrohre für obere Drehzahlbereiche der Brennkraftmaschine (18) ausgebildet sind,
wobei
die Brennkraftmaschine (18) eine Kurbelwelle mit 180-Grad-Kurbelwinkel und n Zylindern aufweist, wobei die Zylinder 1 bis n/2 über jeweilige Saugrohre (16) mit einem ersten Luftsammler (14) und die Zylinder (n/2+1) bis n über jeweilige Saugrohre (16) mit einem zweiten Luftsammler (15) verbunden sind, und daß die Ausgleichsklappe (20) und die Saugrohre (16) eines Luftsammlers (14,15) derart angeordnet sind, daß sich bei geschlossener Ausgleichsklappe (20) für die jeweils über die Saugrohre (16) versorgten Zylinder mit zunehmender Zylindernummer eine zunehmende Saugstrecke (12,22,24) ergibt.

2. Sauganlage nach Anspruch 1,
**dadurch gekennzeichnet, daß**
wenigstens zwei separate Luftsammler (14,15) vorgesehen sind.

3. Sauganlage nach Anspruch 2,
**dadurch gekennzeichnet, daß**
je zwei Luftsammler (14,15) über ein Resonanzrohr (32) miteinander verbunden sind, wobei das Resonanzrohr (32) eine Resonanzklappe (36) zum wahlweise Öffnen oder Schließen desselben derart aufweist, daß die jeweiligen Luftsammler (14,15) wahlweise über das Resonanzrohr (32) miteinander verbunden sind oder nicht.

4. Sauganlage nach einem der vorhergehenden Ansprüche,
**dadurch gekennzeichnet, daß**
n = 4 ist.

5. Sauganlage nach einem der Ansprüche 1 bis 3,
**dadurch gekennzeichnet, daß**
n = 8 ist und eine Zündfolge der Zylinder 1 bis 8 folgendermaßen lautet 1-5-2-6-4-8-3-7.

6. Sauganlage nach einem der vorhergehenden Ansprüche,
**dadurch gekennzeichnet, daß**
die Zylinder auf wenigstens zwei Zylinderbänke (38,40), insbesondere auf zwei Zylinderdoppelbänke, verteilt sind, wobei jeder Luftsammler (14,15) Zylinder einer Zylinderbank (38,40) oder einer Zylinderdoppelbank mit Verbrennungsluft versorgt und die Saugrohre (16) des ersten Luftsammlers (14) diejenigen des zweiten Luftsammlers (15) kreuzen.

## Claims

1. Induction system for supplying an internal combustion engine (18) with combustion air, in particular for a motor vehicle, having at least one separate air manifold (14, 15), from which in each case cylinder-specific induction pipes (16) lead to air intakes of cylinders of the internal combustion engine (18), at least one balancing valve (20) being arranged in the air manifold (14, 15), which valve optionally, in the closed position, divides the air manifold (14, 15) to form a long preintake length (12, 22) or, in the open position, instead of a long preintake length (12, 22), provides an air manifold (14, 15) with an increased volume (22, 24), the induction pipes (16) being designed as ram pipes for upper speed ranges of the internal combustion engine (18), the internal combustion engine (18) having a crankshaft with a 180° crank angle and n cylinders, the cylinders 1 to n/2 being connected to a first air manifold (14) via respective induction pipes (16) and the cylinders (n/2+1) to n being connected to a second air manifold (15) via respective induction pipes (16), and in that the balancing valve (20) and the induction pipes (16) of an air manifold (14, 15) are arranged in such a manner that, when the balancing valve (20) is closed, there is an increasing induction length (12, 22, 24) for the cylinders which are supplied in each case via the induction pipes (16) as the cylinder number increases.

2. Induction system according to Claim 1, **characterized in that** at least two separate air manifolds (14, 15) are provided.

3. Induction system according to Claim 2, **characterized in that** in each case two air manifolds (14, 15) are connected to one another via a tuned pipe (32), the tuned pipe (32) having a tuned valve (36) for optionally opening or closing the pipe in such a manner that the respective air manifolds (14, 15) are optionally connected or not connected to one another via the tuned pipe (32).

4. Induction system according to one of the preceding claims, **characterized in that** n = 4.

5. Induction system according to one of Claims 1 to 3, **characterized in that** n = 8 and an ignition sequence for the cylinders 1 to 8 is as follows 1-5-2-6-4-8-3-7.

6. Induction system according to one of the preceding claims, **characterized in that** the cylinders are distributed over at least two cylinder banks (38, 40), in particular over two double cylinder banks, each air manifold (14, 15) supplying cylinders of one cylinder bank (38, 40) or one double cylinder bank with combustion air, and the induction pipes (16) of the first air manifold (14) crossing those of the second air manifold (15).

## Revendications

1. Installation d'aspiration pour l'alimentation d'un moteur à combustion interne (18) en air de combustion, en particulier pour un véhicule automobile, comprenant au moins un collecteur d'air séparé (14, 15) dont à chaque fois des tubes d'aspiration (16) individuels pour chaque cylindre conduisent à des entrées d'air de cylindres du moteur à combustion interne (18), au moins une soupape d'équilibrage (20) étant disposée dans le collecteur d'air (14, 15), laquelle divise le collecteur d'air (14, 15) de manière sélective dans l'état fermé en une longue distance de préaspiration (12, 22) ou met à disposition, dans l'état ouvert, au lieu d'une longue distance de préaspiration (12, 22), un collecteur d'air (14, 15) de volume accru (22, 24), les tubes d'aspiration (16) étant réalisés en tant que tubes résonants pour des régimes supérieurs du moteur à combustion interne (18),
le moteur à combustion interne (18) présentant un vilebrequin avec un angle de vilebrequin de 180 degrés et n cylindres, les cylindres 1 à n/2 étant raccordés par le biais de tubes d'aspiration respectifs (16) à un premier collecteur d'air (14) et les cylindres (n/2+1) à n étant raccordés par des tubes d'aspiration respectifs (16) à un deuxième collecteur d'air (15), et la soupape d'équilibrage (20) et les tubes d'aspiration (16) d'un collecteur d'air (14, 15) étant disposés de telle sorte que l'on obtienne une distance d'aspiration croissante (12, 22, 24) avec un nombre de cylindres croissant avec une soupape d' équilibrage (20) fermée pour les cylindres respectifs alimentés par le biais des tubes d'aspiration (16).

2. Installation d'aspiration selon la revendication 1, **caractérisée en ce qu'**il est prévu au moins deux collecteurs d'air séparés (14, 15).

3. Installation d'aspiration selon la revendication 2, **caractérisée en ce qu'**à chaque fois deux collecteurs d'air (14, 15) sont connectés l'un à l'autre par le biais d'un tube de résonance (32), le tube de résonance (32) présentant une soupape de résonance (36) pour l'ouverture ou la fermeture sélective de celui-ci, de telle sorte que les collecteurs d'air respectifs (14, 15) soient connectés l'un à l'autre ou non, de manière sélective, par le biais du tube de résonance (32).

4. Installation d'aspiration selon l'une quelconque des revendications précédentes, **caractérisée en ce que** n = 4.

5. Installation d'aspiration selon l'une quelconque des revendications 1 à 3, **caractérisée en ce que** n = 8 et une séquence d'allumage des cylindres 1 à 8 a lieu comme suit 1-5-2-6-4-8-3-7.

6. Installation d'aspiration selon l'une quelconque des revendications précédentes, **caractérisée en ce que** les cylindres sont divisés en au moins deux rangées de cylindres (38, 40), en particulier en deux rangées doubles de cylindres, chaque collecteur d'air (14, 15) alimentant des cylindres d'une rangée de cylindres (38, 40) ou d'une rangée double de cylindres en air de combustion, et les tubes d'aspiration (16) du premier collecteur d'air (14) croisant ceux du deuxième collecteur d'air (15).
